# EUROPÄISCHE PATENTSCHRIFT

(11) **EP 3 115 860 B1**
(45) Veröffentlichungstag und Bekanntmachung des Hinweises auf die Patenterteilung: **14.02.2024**
(21) Anmeldenummer: 16166792.8
(22) Anmeldetag: 25.04.2016
(51) Int. Cl.: G05B 19/418, G05B 23/02

(54) **WERKZEUGSYSTEM MIT EINER ANZEIGE IN GRAFISCHER FORM FÜR EINE MONTAGEANLAGE UND EIN VERFAHREN FÜR EIN WERKZEUGSYSTEM EINER MONTAGEANLAGE**
TOOL SYSTEM WITH A DISPLAY IN GRAPHICAL FORM FOR AN ASSEMBLY PLANT AND A METHOD FOR A TOOL SYSTEM OF AN ASSEMBLY PLANT
SYSTÈME D'OUTIL COMPRENANT UN AFFICHAGE EN FORME DE GRAPHIQUE POUR UNE INSTALLATION DE MONTAGE ET PROCÉDÉ POUR UN SYSTÈME D'OUTIL D'UNE INSTALLATION DE MONTAGE

(30) Priorität: 19.06.2015 DE 102015211299
(43) Veröffentlichungstag der Anmeldung: 11.01.2017
(73) Patentinhaber: Robert Bosch GmbH, 70442 Stuttgart (DE)
(72) Erfinder: Court, Denis, 73614 Schorndorf (DE); Hoge, David, 88677 Markdorf (DE); Doelfs, Martin, 70771 Leinfelden-Echterdingen (DE); Wirth, Christian Daniel, 88048 Friedrichshafen-Kluftern (DE); Schmidt, Nils-Holger, 10245 Berlin (DE); Hewing, Michael, 88045 Friedrichshafen (DE)

(56) Entgegenhaltungen:
- EP-A1- 2 560 062
- EP-A1- 2 645 192
- WO-A1-2010/066375
- DE-A1- 10 344 350
- US-A1- 2003 208 448

## Beschreibung

Die vorliegende Erfindung bezieht sich auf ein Werkzeugsystem mit einer Anzeige in grafischer Form für eine Montageanlage und ein Verfahren für ein Werkzeugsystem einer Montageanlage.

Bei Montageanlagen, wie Schraubanlagen, Schweißanlagen, usw., kann Fügetechnik zum Einsatz kommen oder können Prozesse stattfinden, die Daten liefern, die in einem zweidimensionalen Koordinatensystem abbildbar sind (z.B. Schraubtechnik, Schweißtechnik, Nieten etc.). Hier können je nach Bedarf verschiedene Steuerungen Verwendung finden, welche jeweils einen der Prozesse steuern und damit die gerade benötigte Fügetechnik durchführen.

US 2003/0208448 A1 zeigt ein Datenvermittlungssystem (data brokering system) für einen integrierten Fernwerkzeugzugriff, für eine Datensammlung und zur Steuerung.

EP 2 645 192 A1 zeigt ein Verfahren, einen Prozessüberwachungscomputer und ein Computerprogramm zum Überwachen des Fortschritts einer geplanten Aktivität in einem industriellen Prozess, wobei die Aktivität zumindest teilweise über eine Maschine durchgeführt wird und mit dem Prozessüberwachungscomputer einer Bedienperson präsentiert wird.

WO 2010/066375 A1 beschreibt ein integriertes Leit- und Kontrollsystem für Fertigungs- und Qualitätssicherungsprozesse in Produktionslinien mit Bearbeitungsstationen und/oder Werkzeugen. Prozesssignale wie in Ordnung (i.O.) und nicht in Ordnung (n.i.O.) und z.B. gemessene Drehmoment und Drehwinkelwerte sind mittels eines Senders/Empfängers 32 anzeigbar. Im Unterschied dazu zeigt DE 103 44 350 A1 ein Verfahren zum Anzeigen von Informationen in einem Automatisierungssystem, bei welchem Prozessdaten des Automatisierungssystems ereignisgesteuert in einem Laufband angezeigt werden.

Bei einem solchen Werkzeugsystem muss sich der Anwender sehr schnell einen Überblick über die Qualität und Nicht-in-Ordnung-Verteilung (NOK-Verteilung) in der laufenden Produktion verschaffen können, um mögliche Ursachen für Fehler zu eruieren und diese in einer tiefergehenden Analyse zu bestätigen. Es hat sich jedoch gezeigt, dass eine Darstellung in beispielsweise einer Tabelle hierfür nicht ausreichend geeignet ist.

Daher ist es Aufgabe der vorliegenden Erfindung, ein Werkzeugsystem mit einer Anzeige in grafischer Form für eine Montageanlage und ein Verfahren für ein Werkzeugsystem einer Montageanlage bereitzustellen, mit welchen die zuvor genannten Probleme gelöst werden können. Insbesondere sollen ein Werkzeugsystem mit einer Anzeige in grafischer Form für eine Montageanlage und ein Verfahren für ein Werkzeugsystem einer Montageanlage bereitgestellt werden, bei welchen sich der Anwender sehr schnell einen Überblick über die Qualität und NOK-Verteilung in der laufenden Produktion verschaffen kann.

Diese Aufgabe wird durch ein Werkzeugsystem mit einer Anzeige in grafischer Form für eine Montageanlage nach Anspruch 1 gelöst. Das Werkzeugsystem hat mindestens eine Werkzeugsteuerung zur Steuerung eines Werkzeugelements zur Behandlung eines Werkstücks, und eine Datenbehandlungseinrichtung zur Behandlung von Daten, die von der mindestens einen Werkzeugsteuerung bei einer Behandlung des Werkstücks erzeugt wurden, wobei die Datenbehandlungseinrichtung ausgestaltet ist, die Daten von mindestens zwei mit derselben Werkzeugsteuerung nacheinander ausgeführten gleichartigen Behandlungen mindestens einen Werkstücks derart an eine Anzeigeeinrichtung zu senden, dass die Informationen der Daten auf der Anzeigeeinrichtung in einer Reihe nebeneinander als ein Strahl angezeigt werden, wie in Anspruch 1 beschrieben.

Bei dem beschriebenen Werkzeugsystem kann sich der Anwender sehr schnell einen Überblick über die Qualität und Nicht-in-Ordnung-Verteilung (NOK-Verteilung) in der laufenden Produktion verschaffen, so dass er anhand von Mustern mögliche Ursachen einfach und dadurch schnell und sicher eruieren und diese in einer tiefergehenden Analyse bestätigen kann. Die hier gewählte grafische Darstellung bietet gegenüber der reinen tabellarischen Auflistung von Daten den Vorteil, dass in der grafischen Darstellung Muster für das menschliche Auge viel schneller erfassbar sind. Neue Datensätze werden ständig aktualisiert, wodurch der Anzeigestrahl immer die aktuellsten Produktionsdaten anzeigt. Mit anderen Worten, die Daten "durchlaufen" den Strahl.

Ein weiterer Vorteil besteht, wenn zudem eine farbliche Unterscheidung der Qualität der einzelnen durchgeführten Prozesse gegeben ist, wie beispielsweise von Verschraubungen, die in Ordnung oder nicht in Ordnung sind (OK- und NOK-Verschraubungen) eingeteilt werden. Eine solche farbliche Unterscheidung der Qualität unterstützt bei dem schnellen Überblick noch zusätzlich.

Vorteilhafte weitere Ausgestaltungen des Werkzeugsystems sind in den abhängigen Ansprüchen angegeben.

Die Aufgabe wird zudem durch ein Verfahren für ein Werkzeugsystem einer Montageanlage nach Anspruch 8 gelöst. Das Verfahren erzielt die gleichen Vorteile, wie sie zuvor in Bezug auf das Werkzeugsystem genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild einer Montageanlage mit einem Werkzeugsystem gemäß einem ersten Ausführungsbeispiel;
Fig. 2 eine Ansicht einer Anzeige auf einer Anzeigeeinrichtung des Werkzeugsystems;
Fig. 3 ein Flussdiagramm eines Verfahrens für ein Werkzeugsystem einer Montageanlage gemäß dem ersten Ausführungsbeispiel;
Fig. 4 ein stark vereinfachtes schematisches Schaubild von Prozessdaten, die in dem Werkzeugsystem gemäß einem zweiten Ausführungsbeispiel versendet werden.

In den Figuren sind gleiche oder funktionsgleiche Elemente, sofern nichts anderes angegeben ist, mit denselben Bezugszeichen versehen.

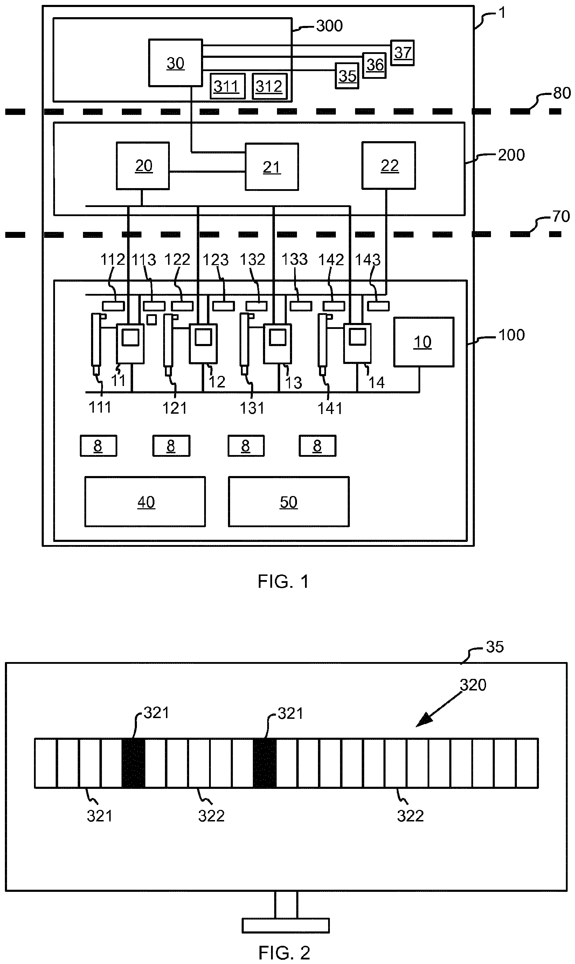

Fig. 1 zeigt ein Werkzeugsystem 1, das bei einer Montageanlage 100 zum Einsatz kommt. Die Montageanlage 100 kann beispielsweise eine Fertigungslinie für ein Fahrzeug, ein elektronisches Gerät, Möbel, usw. sein. Die Montageanlage 100 kann jedoch zusätzlich oder alternativ auch als mehrere einzelne Montagestationen ausgestaltet sein.

Mit dem Werkzeugsystem 1 können Werkstücke 8 mit Hilfe einer Produktionssteuerung 10 und Werkzeugsteuerungen 11, 12, 13, 14 bearbeitet werden. Hierfür steuern die Werkzeugsteuerungen 11, 12, 13, 14 jeweils ein Werkzeugelement 111, 121, 131, 141 an. Die Produktionssteuerung 10 ist den Werkzeugsteuerungen 11, 12, 13, 14 übergeordnet und steuert die Koordination der Werkzeugsteuerungen 11, 12, 13, 14 im Produktionsablauf oder Montageablauf in der Montageanlage 100.

Neben den Steuerungen 10 bis 14 hat das Werkzeugsystem 1 eine erste Datenbehandlungseinrichtung 20, eine erste Datenbank 21, eine zweite Datenbank 22, eine zweite Datenbehandlungseinrichtung 30, Verbindungen zu Web-Anwendungen, wie einer als herkömmlicher Computerbildschirm ausgeführten Web-Anzeigeeinrichtung 31, einer als Tablet-PC (PC = Personalcomputer) ausgeführten Web-Anzeigeeinrichtung 32 und einer als Mobiltelefon ausgeführten Web-Anzeigeeinrichtung 33, ein bereits existierendes Qualitätsmanagementsystem 40, ein bereits existierendes Prozessdatencockpit 50, das als Anzeigeeinrichtung ausgeführt sein kann, eine erste Firewall 70, und eine zweite Firewall 80. Die Web-Anzeigeeinrichtungen 31, 32, 33 sind mit dem Werkzeugsystem 1 jeweils über das Internet verbunden.

Hierbei sind die Werkzeugsteuerungen 11, 12, 13, 14 und die Werkzeugelemente 111, 121, 131, 141 in der Montageanlage 100 angeordnet, welche durch die erste Firewall 70 von einer Schutzzone 200 getrennt sind. Der Schutzzone 200 sind die erste Datenbehandlungseinrichtung 20 sowie die erste und zweite Datenbank 21, 22 zugeordnet. Die Schutzzone 200 ist durch die zweite Firewall 80 von einem Büro- oder Office-Intranet 300 getrennt. Dem Office-Intranet 300 ist die zweite Datenbehandlungseinrichtung 20 zugeordnet. In dem Office-Intranet 300 können Anwender in einem der Montageanlage 100 zugeordneten Büro auf die Daten 112, 113, 122, 123, 132, 133, 142, 143 der Montageanlage 100 zugreifen.

Im Betrieb sendet die Werkzeugsteuerung 11, nachdem mit dem Werkzeugelement 111 eines oder mehrere der Werkstücke 8 bearbeitet worden ist/sind, Prozessdaten 112, wie einzelne Messdaten oder Messdaten in Kurvenform, usw., an die erste Datenbehandlungseinrichtung 20. Zudem sendet die Werkzeugsteuerung 11 dann oder zumindest teilweise gleichzeitig auch Qualitätsdaten 113 an die zweite Datenbank 22. Die Qualitätsdaten 113 können auch von den Prozessdaten 112 umfasst sein, und so zusammen mit den Prozessdaten 112 an die erste Datenbehandlungseinrichtung 20 gesendet werden. Die erste Datenbehandlungseinrichtung 20 nimmt die Prozessdaten 112 entgegen und speichert sie an der richtigen Stelle in der ersten Datenbank 21. Die Qualitätsdaten 113 werden in der zweiten Datenbank 22 gespeichert.

Der Betrieb der Werkzeugsteuerungen 12, 13, 14 funktioniert analog zu dem zuvor beschriebenen Betrieb der Werkzeugsteuerung 11, so dass auch die Prozessdaten 122, 132, 142 an die erste Datenbehandlungseinrichtung 20 gesendet werden, von der ersten Datenbehandlungseinrichtung 20 entgegengenommen und an der richtigen Stelle in der ersten Datenbank 21 gespeichert werden und die Qualitätsdaten 123, 133, 143 in der zweiten Datenbank 22 gespeichert werden.

Fig. 2 zeigt als Beispiel die Anzeigeeinrichtung 31, welche einen Strahl 320 anzeigt, in welchem in einer Reihe unmittelbar nebeneinander Informationen 321, 322 zu den Qualitätsdaten 113 der Werkzeugsteuerung 11 für nacheinander durchgeführte gleichartige Prozesse angeordnet sind. In Fig. 2 sind alle Informationen 321, 322 jeweils als ein Balken mit gleicher Höhe und Breite dargestellt. Hierbei stehen die Informationen 321 für einen Prozess, dessen Qualität in Ordnung ist. Dagegen stehen die Informationen 322 für einen Prozess, dessen Qualität nicht in Ordnung ist. Der Prozess ist immer der gleiche Prozess, wie beispielsweise die Verschraubung einer Schraube in zwei verschieden dicken Werkstücken 8 mit der Werkzeugsteuerung 11.

In Fig. 2 sind die Informationen 321 vorzugsweise als dunkle Balken dargestellt, wohingegen die Informationen 322 als helle Balken dargestellt sind. Selbstverständlich kann die Darstellung auch in anderer farblicher Gestaltung erfolgen, beispielsweise als rot/grün, gelb/blau, schwarz/grau, schraffiert / unschraffiert, gepunktet / ungepunktet, usw. oder Kombinationen davon. Der Übersichtlichkeit halber sind in Fig. 2 nur einige der Informationen 322 mit einem Bezugszeichen versehen.

Außerdem stehen die Informationen 322 auf der linken Seite in Fig. 2 für Informationen, welche zu Qualitätsdaten 113 gehören, die zuletzt aufgenommen wurden. Die Informationen 322 auf der rechten Seite in Fig. 2 stehen dagegen für Informationen, welche zu Qualitätsdaten 113 gehören, die zuvor aufgenommen wurden. Wird nun mit der Werkzeugsteuerung 11 eine weiterer Prozess, wie die Verschraubung einer Schraube in zwei verschieden dicken Werkstücken 8 durchgeführt, so werden die Informationen 321 oder 322 zu den dadurch mit der Werkzeugsteuerung 11 erzeugten Qualitätsdaten 113 auf der linken Seite in Fig. 2 an den Strahl 320 angefügt. Da der Strahl 320 nur eine vorbestimmte maximale Zahl an vorbestimmten Informationen 321, 322 aufweist, wird die bisherige letzte Information 322 auf der rechten Seite in Fig. 2 nicht mehr angezeigt bzw. aus dem Strahl 320 entfernt. Somit laufen die Informationen 321, 322 zu den einzelnen Prozessen der Werkzeugsteuerung 11 durch den Strahl durch. Der Strahl 320 funktioniert also wie ein beidseitig offenes Rohr an dessen einen Ende Balken eingefügt werden, was zur Folge hat, dass an dessen anderem Ende Balken herausfallen. Somit findet eine ständige Aktualisierung der Informationen 321, 322 statt, wodurch der Anwender immer auf dem aktuellen Stand ist.

Die vorbestimmte maximale Zahl an vorbestimmten Informationen 321, 322 kann für einen Schraubprozess hundert sein. Da speziell im Umfeld der Schraubtechnik in 100er Einheiten gedacht wird, bildet ein 100er-Strahl in der Schraubtechnik ein wichtiges Instrument für den Anwender, um einen Eindruck der aktuellen Fehlerraten und deren Verteilung zu bekommen. Durch die Verteilung der OK- und NOK-Verschraubungen kann der Anwender Problemmuster sehr schnell erkennen, z.B. schlechte Schraubencharge - erkennbar durch plötzliches Auftreten mehrerer aufeinander folgender NOK-Verschraubungen nach zuvor OK-Verschraubungen. Es ist jedoch für jeden Prozess auch jede andere vorbestimmte maximale Zahl denkbar.

Der Strahl 320 ist eine grafische Darstellungsform von aktuellen Produktionsdaten einer Spindel als Werkzeugelement 111. Fährt der Anwender mit der Maus über den Strahl 320, bekommt er zusätzliche Daten zu jedem einzelnen Prozess, beispielsweise jeder einzelnen Verschraubung, angezeigt, was ihn bei der Auswahl relevanter Analysedaten unterstützt.

Die Datenbehandlungseinrichtung 30 ist entsprechend ausgestaltet, die Qualitätsdaten 113, 123, 133, 143 von mindestens zwei mit derselben Werkzeugsteuerung 11 bis 14 nacheinander ausgeführten gleichartigen Behandlungen mindestens einen Werkstücks 8 derart an die Anzeigeeinrichtung 31 und/oder das Prozessdatencockpit 50 zu senden, dass die Informationen 321, 322 auf der Anzeigeeinrichtung gemäß Fig. 2 angezeigt werden.

Somit werden in dem Strahl 320 immer die zuletzt von derselben Werkzeugsteuerung 11 bis 14 erzeugten Informationen 321, 322 der Daten 113, 123, 133, 143 angezeigt.

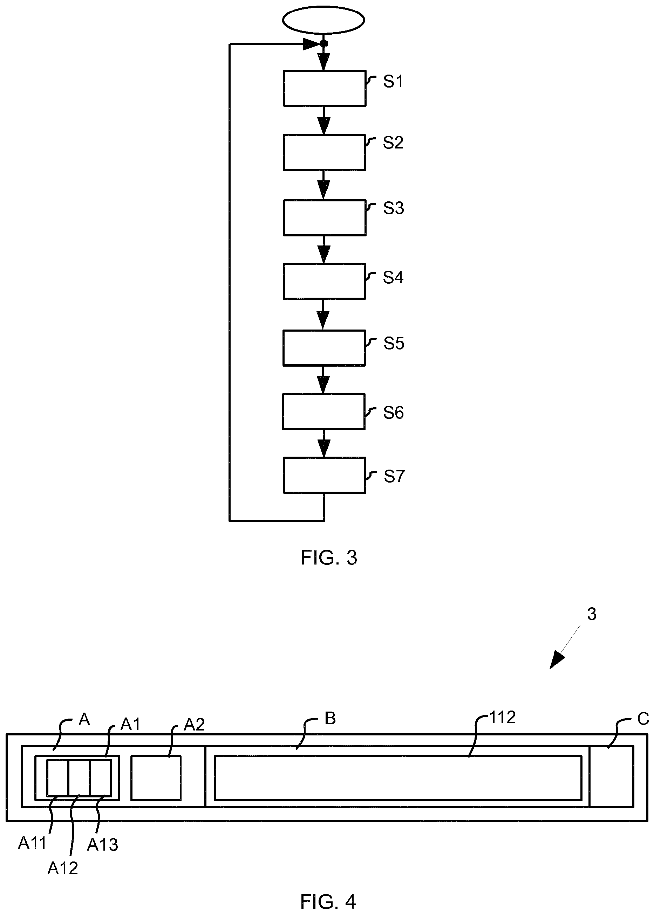

Wie in Fig. 3 veranschaulicht, wird bei einem Verfahren für das Werkzeugsystem 1 nach dem Start des Verfahrens bei einem Schritt S1 mit einer der Werkzeugsteuerungen 11 bis 14 das jeweils zugehörige Werkzeugelement 111, 121, 131, 141 zur Behandlung mindestens eines der Werkstücke 8 angesteuert. Danach geht der Fluss zu einem Schritt S2 weiter.

Bei dem Schritt S2 werden die bei der Behandlung des oder der Werkstücke 8 erzeugten Prozessdaten 112, 122, 132, 142 von der betroffenen Werkzeugsteuerung 11 bis 14 an die erste Datenbehandlungseinrichtung 20 gesendet, wie zuvor beschrieben. Danach geht der Fluss zu einem Schritt S3 weiter.

Bei dem Schritt S3 werden die aufgrund der Behandlung des oder der Werkstücke 8 erzeugten Qualitätsdaten 112, 122, 132, 142 von der betroffenen Werkzeugsteuerung 11 bis 14 an die zweite Datenbank 22 gesendet, wie zuvor beschrieben. Danach geht der Fluss zu einem Schritt S4 weiter.

Bei dem Schritt S4 werden die von der Werkzeugsteuerung 11 bis 14 bei der Behandlung des oder der Werkstücke 8 erzeugten Prozessdaten 112, 122, 132, 142 von der ersten Datenbehandlungseinrichtung 20 entgegengenommen. Danach geht der Fluss zu einem Schritt S5 weiter.

Bei dem Schritt S5 veranlasst die erste Datenbehandlungseinrichtung 20, dass die Prozessdaten 112, 122, 132, 142 in der ersten Datenbank 21 gespeichert werden, woraufhin die Prozessdaten 112, 122, 132, 142 in der ersten Datenbank 21 gespeichert werden. Danach geht der Fluss zu einem Schritt S6 weiter.

Bei dem Schritt S6 verarbeitet die zweite Datenbehandlungseinrichtung 30 die Prozessdaten 112, 122, 132, 142. Hierfür greift die zweite Datenbehandlungseinrichtung 30 auf die erste oder zweite Datenbank 21, 22 zu und analysiert anschließend die Daten 112, 113, 122, 123, 132, 133, 142, 143 so dass die Daten 112, 113, 122, 123, 132, 133, 142, 143 auf einer Anzeigeeinrichtung, beispielsweise der Web-Anzeigeeinrichtung 31 angezeigt werden können. Hierbei können insbesondere die Informationen 321, 322 zu den Qualitätsdaten 113, 123, 133, 143 angezeigt werden, wie in Fig. 2 gezeigt.

Demzufolge greift die zweite Datenbehandlungseinrichtung 30 bei dem Schritt S6 auf die zweite Datenbank 22 zu und die zweite Datenbehandlungseinrichtung 30 analysiert bei dem Schritt S6 die Qualitätsdaten 113, 123, 133, 143 in Bezug auf ein vorbestimmtes Kriterium. Weisen die Qualitätsdaten 113, 123, 133, 143 beispielsweise eine Angabe auf, ob die Prozessdaten 112, 122, 132, 142 in Ordnung oder nicht in Ordnung sind, so ist das Kriterium, ob die Prozessdaten 112, 122, 132, 142 in Ordnung oder nicht in Ordnung sind. Als Folge davon sendet die Datenbehandlungseinrichtung 30 für unterschiedliche Ergebnisse der Analyse Anzeigedaten 311, 312 an zumindest eine der Anzeigeeinrichtungen 31, 32 33. Danach geht der Fluss zu einem Schritt S7 weiter.

Bei dem Schritt S7 werden die Anzeigedaten 311, 312 von beispielsweise der Anzeigeeinrichtung 31 als Informationen 321, 322 in dem Strahl 320 angezeigt. Vorzugsweise sind dabei die Daten 113, 123, 133, 143 als Informationen 321, 322 in unterschiedlichen Farben und/oder unterschiedlicher grafischer Gestaltung in dem Strahl 320 dargestellt. Hierbei sind die Informationen für ein und dasselbe Ergebnis der Analyse in derselben Farbe und/oder grafischen Gestaltung angezeigt, wie in Fig. 2 als Beispiel gezeigt.

Somit führt die zweite Datenbehandlungseinrichtung 30 bei dem Schritt S6 eine Analyse der 112, 113, 122, 123, 132, 133, 142, 143 und eine Erstellung einer Visualisierung der Prozessdaten 112, 122, 132, 142 aus, damit bei dem Schritt S7 die Visualisierung der 112, 113, 122, 123, 132, 133, 142, 143 erfolgen kann.

Danach geht der Fluss zu dem Schritt S1 zurück, so dass das Verfahren für dieselbe oder eine andere Werkzugsteuerung 11, 12, 13, 14 gestartet werden kann, wie zuvor beschrieben.

Bei dem Verfahren kann der Schritt S3 alternativ auch vor oder zumindest teilweise zeitgleich mit dem Schritt S2 ausgeführt werden. Zudem kann das Verfahren für mehrere Werkzugsteuerungen 11, 12, 13, 14 zumindest teilweise parallel ablaufen. In dem letzteren Fall würde das Verfahren von einer der Werkzugsteuerungen 11, 12, 13, 14 ausgeführt.

Durch die zuvor beschriebene Architektur des Werkzeugsystems 1 wird zum einen die Unabhängigkeit von bestehenden IT-Infrastrukturen (z.B. Qualitätsdatenbank) erreicht und weitere prozessrelevante Daten für Überwachung (Monitoring) und Analysen gespeichert. Außerdem ist die mit dem Werkzeugsystem 1 realisierte Lösung durch die offene Schnittstelle zu allen Steuerungen 10 bis 14 kompatibel, die das offene Protokoll unterstützen.

Durch diesen architektonischen Aufbau des Werkzeugsystems 1 können die durch die Firewalls 70, 80 geschützten Zonen für die Montageanlage 100, Schutzzone 200 und Office-Intranet 300 sicher überbrückt werden, wie zuvor beschrieben. Dadurch kann vom Niveau des Anwenders (Office-Level) in dem Office-Intranet 300 auf Daten aus der Herstellung oder Produktion, nämlich die Prozessdaten 112, 122, 132, 142, auf sichere Art und Weise zugegriffen werden.

Fig. 4 zeigt den Aufbau eines Datenrahmens 3 für die Prozessdaten 112 als Beispiel in Bezug auf ein zweites Ausführungsbeispiel der Montageanlage 100 beziehungsweise des Werkzeugsystems 1. Die Datenrahmen für die Prozessdaten 122, 132, 142 sind jedoch auf die gleiche Weise aufgebaut.

Wie in Fig. 4 gezeigt, sind die Prozessdaten 112, 122, 132, 142 in einen Datenrahmen 3 gemäß einem vorbestimmten Protokoll gepackt. Anders ausgedrückt, bei dem Werkzeugsystem 1 werden die Prozessdaten 112, 122, 132, 142 gemäß dem vorbestimmten Protokoll gesendet. Insbesondere können die Prozessdaten 112, 122, 132, 142 gemäß dem im Entwurf befindlichen JSON-Protokoll gesendet werden. Nachfolgend sind in Anführungszeichen gestellte Begriffe, wie "node id" usw. Bezeichnungen des JSON-Protokolls.

Gemäß dem vorbestimmten Protokoll ist den Prozessdaten 112 ein Datenkopf A vorangestellt und sind die Prozessdaten 112 einem Datenteil B zugeordnet, welchem ein Schlussteil C folgt. Der Datenkopf A wird zuerst an die erste Datenbehandlungseinrichtung 20 übertragen, der Schlussteil C zuletzt. In dem Datenkopf A sind Stammdaten A1 der Werkzeugsteuerung 11 und Informationen A2 zu den Prozessdaten 112 angeordnet. Der Schlussteil C weist Steuerbits auf, welche das Ende des durch Datenkopf A, Datenteil B und Schlussteil C aufgebauten Datenrahmens anzeigen.

Die Stammdaten A1 weisen, neben nicht dargestellten Steuerbits, die Identifikationsnummer A11 der Werkzeugsteuerung 11 den Montageort A12 der Werkzeugsteuerung 11 und den Namen A13 der Werkzeugsteuerung 11 auf. Es ist jedoch auch möglich, dass die Stammdaten A1 neben den nicht dargestellten Steuerbits nur die Identifikationsnummer A11 oder den Montageort A12 oder den Namen A13 der Werkzeugsteuerung 11 aufweisen. Es sind auch beliebige andere Kombinationen möglich. Die Stammdaten A1 können an beliebiger Stelle im Datenkopf A angeordnet sein, je nachdem, wie dies im vorbestimmten Protokoll festgelegt ist.

Zusätzlich oder alternativ können die Stammdaten A1 der Werkzeugsteuerung 11 neben der Identifikationsnummer A11 "node id" der Werkzeugsteuerung 11 und/oder dem Montageort A12 "location name" der Werkzeugsteuerung 11 und/oder dem Namen A13 "channel" der Werkzeugsteuerung 11 auch ein Format "format" der Werkzeugsteuerung 11 aufweisen, das als Wert "channel" oder "application" für Anwendung hat. Zusätzlich oder alternativ können die Stammdaten A1 auch die laufende Nummer "nr" der Werkzeugsteuerung 11 in der Montageanlage 100 aufweisen. Zusätzlich oder alternativ können die Stammdaten A1 auch eine Hardwarebezeichnung "hardware" der Werkzeugsteuerung 11 aufweisen. Zusätzlich oder alternativ können die Stammdaten A1 auch eine MAC-Adresse "mac0" der Werkzeugsteuerung 11 aufweisen. Zusätzlich oder alternativ können die Stammdaten A1 auch die IP-Adresse "ip0" der Werkzeugsteuerung 11 aufweisen. Zusätzlich oder alternativ können die Stammdaten A1 auch die Seriennummer "tool serial" der Werkzeugsteuerung 11 aufweisen. Je nach Bedarf sind auch andere Angaben zu der Werkzeugsteuerung 11 in den Stammdaten A1 möglich.

Die Informationen A2 zu den Prozessdaten 112 können aufweisen: ein Ergebnis "result" des mit der Werkzeugsteuerung 11 durchgeführten Prozesses, beispielsweise die Qualitätsdaten 113; ein Datum "date" des mit der Werkzeugsteuerung 11 durchgeführten Prozesses; die Softwareversion der Software "sw version" der Werkzeugsteuerung 11; eine Softwareaufbaubezeichnung (Software Build Bezeichnung) "sw build" der Software der Werkzeugsteuerung 11; eine Nummer "pgr nr" des mit der Werkzeugsteuerung 11 durchgeführten Prozesses; einen Namen "prg name" des mit der Werkzeugsteuerung 11 durchgeführten Prozesses; eine letzte Änderung eines Programms "prg date" des mit der Werkzeugsteuerung 11 durchgeführten Prozesses mit Datum und in Worten; eine Identifikationsnummer "id code" des / der bearbeiteten Werkstücks / Werkstücke 8; die Einheit der gemessenen physikalischen Größe, wie beispielsweise Drehmoment beim Schraubprozess "torque unit"; ein Abbruchkriterium "last cmd" für den durchgeführten Prozess; eine Identifikationsnummer der Einrichtung, welche den Abbruch des durchgeführten Prozesses vorgenommen hat "stopped by"; eine Dauer "duration" des durchgeführten Prozesses. Bei einem Schraubprozess können zusätzlich eine Zeilenbezeichnung der letzten Stufe "last step row" und/oder eine Spaltenbezeichnung der letzten Stufe "last step column" in den Informationen A2 zu den Prozessdaten 112 vorhanden sein.

Nachfolgend ist ein Beispiel für die Informationen in einem Datenkopf A für Prozessdaten eines Schraubprozesses angegeben:

```
 "format": "channel",
    "node id": "5.4",
    "nr": 34,
    "result": "OK",
    "Hardware": "SE352M",
    "mac0": "00-CO-3A-6 E-4a-76",
    "ip0": "10.23.232.162",
    "sw version": "2.400",
    "sw build": "Release",
    "location name": ["1", "2", "3", "4", "5", "6", "7"],
    "channel": "54 BG1 LT353 DMC",
    "prg nr": 0,
    "prg name": "XY_OKVerschraubunBG3",
    "prg date": "2010-03-22 13:35:53",
    "nominal torque": 59.400000,
    "date": "2014-11-25 13:32:28",
    "id code": "L 000000007960",
    "torque unit": "Nm",
    "last cmd": "TF Angle",
    "stopped by": 4,
    "last step row": "15",
    "last step column": "A",
    "duration": "10.9",
    "tool serial": 781000036
```

Die Prozessdaten 112 umfassen hingegen Informationen zu dem durchgeführten Prozess, wie beispielsweise bei einem Schraubvorgang:

```
"tightening steps": [{
    "row":"2",
    "column": "A",
    "name": "500 Grad Links",
    "last cmd": "TF Angle",
    "stopped by": 4,
    "result": "OK",
    "tightening functions": [{
    "name": "TF Angle",
    "nom": 500,
    "act": 500
    },
    ...
    {
    "name": "MF GradientMax",
    "nom": 11,
    "act": -0.043000
    }],
    "graph": {
    "angle values": [],
    "torque values": [],
    "time values": []
    }
    }
```

Die Schraubstufen "tightening steps" werden unverändert in der ersten Datenbank als JSON-String abgespeichert.

Aus den Schraubfunktionen "tightening functions" der bewertenden Stufe (Stufe aus "last step column" und "last step row") werden zusätzlich die minimalen und maximalen Werte sowie die Endwerte ausgelesen und in der Prozessdatentabelle in der ersten Datenbank 21 abgespeichert. Falls es sich bei der bewertenden Stufe um eine erweiterte Schraubstufe "extended" handelt wird diese auch korrekt ausgewertet.

Damit die minimalen und maximalen Werte korrekt ausgelesen und abgespeichert werden, müssen diese in den Schraubfunktionen "tightening functions" enthalten sein, wie beispielsweise "TF AngleMin", "MF Torque Max" oder für eine erweiterte Schraubstufe "extended" in "UfB_MOMENT_MAXWERT_CMD".

Um die graphische Darstellung der Schraubkurve nutzen zu können, müssen in dem JSON Objekt "graph" die Felder Drehwinkelwerte "angle values", Drehmomentwerte "torque values" und Zeitwerte "time values" in Sekunden befüllt sein.

Die Prozessdaten für andere Fügeprozesse, wie Schweißen, Nieten, usw. sind an die für diese Fügeprozesse charakteristischen Werte entsprechend angepasst.

Somit schicken die Werkzeugsteuerungen 11, 12, 13, 14 aktiv nach jedem Schraubvorgang Prozessdaten (einzelne Messwerte, Messkurven etc.) mit dem vorbestimmten Protokoll gemäß Fig. 4. Da der Kopfteil A1 des Datenrahmens 3 in dem vorbestimmten Protokoll gemäß Fig. 4 die Stammdaten A der sendenden Werkzeugsteuerung 11, 12, 13, 14 enthält, weiß die empfangende erste Datenbehandlungseinrichtung 20, ob es sich um Daten von einer bereits bekannten Werkzeugsteuerung 11, 12, 13, 14 handelt und kann die Prozessdaten 112, 122, 132, 142 entsprechend zuordnen. Handelt es sich um Daten von einer bis dato nicht bekannten Werkzeugsteuerung 11, 12, 13, 14, wird die Werkzeugsteuerung 11, 12, 13, 14 von der ersten Datenbehandlungseinrichtung 20 als "nicht zugeordnet" mit ihren Stammdaten A im Übersichtsbaum der Software der ersten Datenbehandlungseinrichtung 20 angelegt.

Ist beispielsweise die Werkzeugsteuerung 11 noch nicht bei der Datenbehandlungseinrichtung 20 und somit der ersten Datenbank 21 bekannt, kann der Anwender die Werkzeugsteuerung 11 dann bequem dem/der entsprechenden Werk/Halle/Anlage im Übersichtsbaum der Software der ersten Datenbehandlungseinrichtung 20 zuordnen. Somit ist für die Werkzeugsteuerung 11 keine händische Eingabe von Stammdaten A, wie Identifikationsnummer A11, Montageort A12, Name A13, etc., notwendig.

Auf diese Weise können die Werkzeugsteuerungen 11, 12, 13, 14, die mit der als Software ausgeführten ersten Datenbehandlungseinrichtung 20 verbunden sind, einfach mit ihren Stammdaten A im Werkzeugsystem 1 angelegt werden, so dass die Werkzeugsteuerungen 11, 12, 13, 14 Daten an die als Software ausgeführte erste Datenbehandlungseinrichtung 20 schicken können. Die Werkzeugsteuerungen 11, 12, 13, 14 melden sich somit automatisch am Werkzeugsystem 1 mit ihren Stammdaten A an, sobald der erste Datensatz mit dem in Fig. 4 gezeigten Aufbau geschickt wird. Damit wird der Aufwand zum Einbinden einer neuen Werkzeugsteuerungen 11, 12, 13, 14 in das Werkzeugsystem 1 geringer als bisher.

Dadurch bietet das Werkzeugsystem 1 ebenfalls eine offene Schnittstelle, die es erlaubt, jede Steuerung 10, 11, 12, 13, 14 daran anzuschließen, die das definierte Datenformat des vorbestimmten Protokolls gemäß Fig. 4 unterstützt. Außerdem ist das Werkzeugsystem 1 komplett unabhängig von bestehender IT-Infrastruktur und beeinflusst diese daher nicht. Somit kann auch mit dieser Lösung aus dem Office-Level auf Produktionsdaten, also die Prozessdaten 112, 122, 132, 142 zugegriffen werden.

Alle zuvor beschriebenen Ausgestaltungen des Werkzeugsystems 1 und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert oder auch weggelassen werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Montageanlage 100 kann eine beliebige Montageanlage sein, wie beispielsweise eine Schraubanlage, eine Schweißanlage, usw.. Hierbei kann jede beliebige Fügetechnik zum Einsatz kommen. Allgemein können in der Montageanlage 100 Prozesse (z.B. gemäß Schraubtechnik, Schweißtechnik, Niettechnik, Stanztechnik, Bohrtechnik, usw.) stattfinden, die Daten in einer in einem zweidimensionalen Koordinatensystem abbildbaren Form liefern.

Somit kann mindestens eine Werkzeugsteuerung 11 bis 14 des Werkzeugsystems 1 eine Schweißsteuerung sein. Alternativ oder zusätzlich kann mindestens eine Werkzeugsteuerung 11 bis 14 des Werkzeugsystems 1 eine Schraubsteuerung sein. Alternativ oder zusätzlich kann mindestens eine Werkzeugsteuerung 11 bis 14 des Werkzeugsystems 1 eine Bohrsteuerung sein. Alternativ oder zusätzlich kann mindestens eine Werkzeugsteuerung 11 bis 14 des Werkzeugsystems 1 eine Nietsteuerung sein. Alternativ oder zusätzlich kann mindestens eine Werkzeugsteuerung 11 bis 14 des Werkzeugsystems 1 eine Stanzsteuerung sein.

Die Anzahl der Werkzeugsteuerungen 11 bis 14 ist beliebig wählbar. Insbesondere können ca. 2000 Werkzeugsteuerungen 11 bis 14 vorgesehen und in das Werkzeugsystem 1 eingebunden sein.

Auch die Produktionssteuerung 10 kann Daten an die erste Datenbehandlungseinrichtung 20 und/oder die zweite Datenbank 22 senden, auch wenn dies in Fig. 1 nicht dargestellt ist.

Es ist auch denkbar, dass die zweite Datenbehandlungseinrichtung 30 auch auf die zweite Datenbank 22 zugreifen kann, um die Qualitätsdaten 113, 123, 133, 143 beispielsweise auf mindestens einer der Web-Anzeigeeinrichtungen 31, 32, 33 anzuzeigen oder in ihre Analyse mit einzubeziehen.

Außerdem ist es möglich, dass auch die Qualitätsdaten 113, 123, 133, 143 in dem vorbestimmten Protokoll gemäß Fig. 4 gesendet werden.

Zusätzlich oder alternativ zu den Web-Anzeigeeinrichtungen 31, 32, 33 kann auch eine nur mit dem Office-Intranet 300 angeschlossene Anzeigeeinrichtung zumindest einen Teil der Daten 112, 113, 122, 123, 132, 133, 142, 143 anzeigen.

## Patentansprüche

1. Werkzeugsystem (1) mit einer Anzeige in grafischer Form für eine Montageanlage (100), mit
mindestens einer Werkzeugsteuerung (11 bis 14) zur Steuerung eines Werkzeugelements (111, 121, 131, 141) zur Behandlung eines Werkstücks (8),
einer ersten Datenbehandlungseinrichtung (20) zur Entgegennahme von Daten (112, 113, 122, 123, 132, 133, 142, 143), die Prozessdaten (112, 122, 132, 142) oder Prozessdaten (112, 122, 132, 142) und Qualitätsdaten (113, 123, 133, 143) umfassen, die von der mindestens einen Werkzeugsteuerung (11 bis 14) bei der Behandlung des mindestens einen Werkstücks (8) erzeugt wurden, sowie zur Speicherung der Prozessdaten (112, 122, 132, 142) in einer ersten Datenbank (21) und zur Speicherung der Qualitätsdaten (113, 123, 133, 143) in einer zweiten Datenbank (22), wobei die Prozessdaten (112, 122, 132, 142) Messwerte in Form von einzelnen Zahlenwerten oder Messkurven umfassen und die Qualitätsdaten (113, 123, 133, 143) eine Aussage umfassen, ob die Behandlung des mindestens einen Werkstücks (8) mit dem Werkzeugelement (111, 121, 131, 141) in Ordnung oder nicht in Ordnung war, und
einer zweiten Datenbehandlungseinrichtung (30) zur Behandlung der Daten (112, 113, 122, 123, 132, 133, 142, 143), die von der mindestens einen Werkzeugsteuerung (11 bis 14) bei einer Behandlung des Werkstücks (8) erzeugt wurden,
wobei die erste Datenbehandlungseinrichtung (20) und die erste und zweite Datenbank (21, 22) in einer Schutzzone (200) angeordnet sind, die von der mindestens einen Werkzeugsteuerung (11 bis 14) durch eine erste Firewall (70) getrennt ist und von der zweiten Datenbehandlungseinrichtung (30) durch eine zweite Firewall (80) getrennt ist,
wobei die zweite Datenbehandlungseinrichtung (30) ausgestaltet ist, die Qualitätsdaten (113, 123, 133, 143) von mindestens zwei mit derselben Werkzeugsteuerung (11 bis 14) nacheinander ausgeführten gleichartigen Behandlungen mindestens eines Werkstücks (8) in Bezug auf ein vorbestimmtes Kriterium zu analysieren und derart an eine Anzeigeeinrichtung (31) zu senden, dass die Informationen (321, 322) der Qualitätsdaten (113, 123, 133, 143) als ein Balken mit gleicher Höhe und Breite auf der Anzeigeeinrichtung (31) in einer Reihe nebeneinander als ein Strahl (320) oder Balkendiagramm angezeigt werden,
wobei die zweite Datenbehandlungseinrichtung (30) zudem ausgestaltet ist, für unterschiedliche Ergebnisse der Analyse an die Anzeigeeinrichtung (31) Anzeigedaten (311) zu senden, die von der Anzeigeeinrichtung (31) als Balken in unterschiedlichen Farben und/oder unterschiedlicher grafischer Gestaltung in dem Strahl (320) oder Balkendiagramm angezeigt werden,
wobei die zweite Datenbehandlungseinrichtung (30) ausgestaltet ist, die Anzeigedaten (311) derart zu erzeugen, dass der Strahl (320) oder das Balkendiagramm eine vorbestimmte maximale Anzahl der Balken für die Informationen (321, 322) der Daten (113, 123, 133, 143) nebeneinander umfasst,
wobei die zweite Datenbehandlungseinrichtung (30) ausgestaltet ist, einen Balken für die Informationen (321, 322) der Qualitätsdaten (113, 123, 133, 143) einer weiteren ausgeführten gleichartigen Behandlung an eine Seite der Reihe anzufügen und, wenn die maximale Anzahl von Balken in der Reihe dadurch überschritten würde, einen Balken an der anderen Seite der Reihe zu entfernen, so dass die Informationen (321, 322) zu den einzelnen ausgeführten gleichartigen Behandlungen durch die Reihe durchlaufen, so dass in dem Strahl (320) oder Balkendiagramm immer die zuletzt von derselben Werkzeugsteuerung (11 bis 14) erzeugten Informationen (321, 322) der Daten (113, 123, 133, 143) angezeigt werden, und
wobei die zweite Datenbehandlungseinrichtung (30) ausgestaltet ist, Prozessdaten (112, 122, 132, 142) aus der ersten Datenbank (21) zu analysieren und zu den einzelnen ausgeführten gleichartigen Behandlungen als Anzeigedaten (311) an die Anzeigeeinrichtung (31) zu senden, so dass der Anwender zusätzliche Daten zu jedem einzelnen Prozess angezeigt bekommt, der eine von der mindestens einen Werkzeugsteuerung (11 bis 14) durchgeführte Behandlung des mindestens einen Werkstücks (8) ist, wenn der Anwender mit einer Maus über den angezeigten Strahl (320) oder das angezeigte Balkendiagramm fährt.

2. Werkzeugsystem (1) nach Anspruch 1, wobei die mindestens eine Werkzeugsteuerung (11 bis 14) eine Schraubsteuerung ist und die vorbestimmte Anzahl hundert ist.

3. Werkzeugsystem (1) nach einem der vorangehenden Ansprüche, wobei die Anzeigeeinrichtung (31) mit dem Werkzeugsystem (1) über das Internet verbunden ist.

4. Werkzeugsystem (1) nach einem der vorangehenden Ansprüche, wobei die zweite Datenbehandlungseinrichtung (30) zur Verarbeitung der von der ersten Datenbehandlungseinrichtung (20) in der ersten Datenbank (21) gespeicherten Prozessdaten (110, 120, 130, 140) für eine Analyse der Prozessdaten (112, 122, 132, 142) und/oder Erstellung einer Visualisierung der Daten (112, 122, 132, 142) und zur Behandlung von Qualitätsdaten (113, 123, 133, 143) in Bezug auf die Qualität der Behandlung des mindestens einen Werkstücks (8) mit dem Werkzeugelement (111, 121, 131, 141) ausgestaltet ist.

5. Werkzeugsystem (1) nach Anspruch 4, wobei sich eine Datensicherheitsstufe für die erste Datenbank (21) und die erste Datenbehandlungseinrichtung (20) von einer Datensicherheitsstufe für die zweite Datenbehandlungseinrichtung (30) unterscheidet.

6. Werkzeugsystem (1) nach einem der vorangehenden Ansprüche,
wobei die zweite Datenbehandlungseinrichtung (30) einer Zone für ein Office-Intranet (300) zugeordnet ist, die durch eine zweite Firewall (80) von der Schutzzone (200) getrennt ist.

7. Werkzeugsystem (1) nach einem der vorangehenden Ansprüche, wobei die mindestens eine Werkzeugsteuerung (11 bis 14) mindestens eine Schweißsteuerung und/oder mindestens eine Schraubsteuerung und/oder mindestens eine Bohrsteuerung und/oder mindestens eine Nietsteuerung und/oder mindestens eine Stanzsteuerung aufweist, und/oder wobei die mindestens zwei Werkzeugsteuerungen (11 bis 14) zum Senden der Daten (112, 122, 132, 142; 113, 123, 133, 143) gemäß einem vorbestimmten Protokoll ausgestaltet sind, bei welchem der Datenkopf (A) der Daten (112, 122, 132, 142; 113, 123, 133, 143) die Stammdaten (A1) der jeweiligen Werkzeugsteuerung (11 bis 14) aufweist.

8. Verfahren für ein Werkzeugsystem einer Montageanlage, das mindestens eine Werkzeugsteuerung (11 bis 14) zur Steuerung eines Werkzeugelements (111, 121, 131, 141) zur Behandlung mindestens eines Werkstücks (8) aufweist, und das eine erste Datenbehandlungseinrichtung (20) aufweist, die zur Entgegennahme von Daten (112, 113, 122, 123, 132, 133, 142, 143) ausgestaltet ist, die Prozessdaten (112, 122, 132, 142) oder Prozessdaten (112, 122, 132, 142) und Qualitätsdaten (113, 123, 133, 143) umfassen, die von der mindestens einen Werkzeugsteuerung (11 bis 14) bei der Behandlung des mindestens einen Werkstücks (8) erzeugt wurden, sowie zur Speicherung der Prozessdaten (112, 122, 132, 142) in einer ersten Datenbank (21) und zur Speicherung der Qualitätsdaten (113, 123, 133, 143) in einer zweiten Datenbank (22) ausgestaltet ist, wobei die Prozessdaten (112, 122, 132, 142) Messwerte in Form von einzelnen Zahlenwerten oder Messkurven umfassen und die Qualitätsdaten (113, 123, 133, 143) eine Aussage umfassen, ob die Behandlung des mindestens einen Werkstücks (8) mit dem Werkzeugelement (111, 121, 131, 141) in Ordnung oder nicht in Ordnung war, wobei die erste Datenbehandlungseinrichtung (20) und die erste und zweite Datenbank (21, 22) in einer Schutzzone (200) angeordnet sind, die von der mindestens einen Werkzeugsteuerung (11 bis 14) durch eine erste Firewall (70) getrennt ist und von der zweiten Datenbehandlungseinrichtung (30) durch eine zweite Firewall (80) getrennt ist, wobei das Verfahren die Schritte aufweist
Behandeln, mit der zweiten Datenbehandlungseinrichtung (30), der Daten (112, 113, 122, 123, 132, 133, 142, 143), die von der mindestens einen Werkzeugsteuerung (11 bis 14) bei einer Behandlung des mindestens einen Werkstücks (8) erzeugt wurden,
wobei die zweite Datenbehandlungseinrichtung (30) die Daten (113, 123, 133, 143) von mindestens zwei mit derselben Werkzeugsteuerung (11 bis 14) nacheinander ausgeführten gleichartigen Behandlungen mindestens eines Werkstücks (8) in Bezug auf ein vorbestimmtes Kriterium analysiert und derart an eine Anzeigeeinrichtung (31) sendet, dass die Informationen (321, 322) der Qualitätsdaten (113, 123, 133, 143) als ein Balken mit gleicher Höhe und Breite auf der Anzeigeeinrichtung (31) in einer Reihe nebeneinander als ein Strahl (320) oder Balkendiagramm angezeigt werden,
wobei die zweite Datenbehandlungseinrichtung (30) für unterschiedliche Ergebnisse der Analyse an die Anzeigeeinrichtung (31) Anzeigedaten (311) sendet, die von der Anzeigeeinrichtung (31) als Balken in unterschiedlichen Farben und/oder unterschiedlicher grafischer Gestaltung in dem Strahl (320) oder Balkendiagramm angezeigt werden,
wobei die zweite Datenbehandlungseinrichtung (30) die Anzeigedaten (311) derart erzeugt, dass der Strahl (320) oder das Balkendiagramm eine vorbestimmte maximale Anzahl der Balken für die Informationen (321, 322) der Daten (113, 123, 133, 143) nebeneinander umfasst,
wobei die zweite Datenbehandlungseinrichtung (30) einen Balken für die Informationen (321, 322) der Qualitätsdaten (113, 123, 133, 143) einer weiteren ausgeführten gleichartigen Behandlung an eine Seite der Reihe anfügt und, wenn die maximale Anzahl von Balken in der Reihe dadurch überschritten würde, einen Balken an der anderen Seite der Reihe entfernt, so dass die Informationen (321, 322) zu den einzelnen ausgeführten gleichartigen Behandlungen durch die Reihe durchlaufen, so dass in dem Strahl (320) oder Balkendiagramm immer die zuletzt von derselben Werkzeugsteuerung (11 bis 14) erzeugten Informationen (321, 322) der Daten (113, 123, 133, 143) angezeigt werden, und
wobei die zweite Datenbehandlungseinrichtung (30) Prozessdaten (112, 122, 132, 142) aus der ersten Datenbank (21) analysiert und zu den einzelnen ausgeführten gleichartigen Behandlungen als Anzeigedaten (311) an die Anzeigeeinrichtung (31) sendet, so dass der Anwender zusätzliche Daten zu jedem einzelnen Prozess angezeigt bekommt, der eine von der mindestens einen Werkzeugsteuerung (11 bis 14) durchgeführte Behandlung des mindestens einen Werkstücks (8) ist, wenn der Anwender mit einer Maus über den angezeigten Strahl (320) oder das angezeigte Balkendiagramm fährt.

9. Verfahren nach Anspruch 8, mit den Schritten
Entgegennehmen, mit der ersten Datenbehandlungseinrichtung (20), der Daten (112, 113, 122, 123, 132, 133, 142, 143), die von den mindestens zwei Werkzeugsteuerungen (11 bis 14) bei der Behandlung des mindestens einen Werkstücks (8) erzeugt wurden,
Speichern der Prozessdaten (112, 122, 132, 142) in einer ersten Datenbank (21), und/oder
Speichern der Qualitätsdaten (113, 123, 133, 143) in einer zweiten Datenbank (22).

## Claims

1. Tool system (1) having a display in graphic form for an assembly installation (100), having
at least one tool controller (11 to 14) for controlling a tool element (111, 121, 131, 141) for treating a workpiece (8),
a first data-handling device (20) for receiving data (112, 113, 122, 123, 132, 133, 142, 143) that comprise process data (112, 122, 132, 142) or process data (112, 122, 132, 142) and quality data (113, 123, 133, 143) that were generated by the at least one tool controller (11 to 14) during the treatment of the at least one workpiece (8), and for storing the process data (112, 122, 132, 142) in a first database (21) and for storing the quality data (113, 123, 133, 143) in a second database (22), wherein the process data (112, 122, 132, 142) comprise measured values in the form of individual numerical values or measurement curves and the quality data (113, 123, 133, 143) comprise a statement as to whether the treatment of the at least one workpiece (8) with the tool element (111, 121, 131, 141) was satisfactory or not satisfactory, and
a second data-handling device (30) for handling the data (112, 113, 122, 123, 132, 133, 142, 143) that were generated by the at least one tool controller (11 to 14) during treatment of the workpiece (8),
wherein the first data-handling device (20) and the first and second database (21, 22) are arranged in a protected zone (200) that is separated from the at least one tool controller (11 to 14) by a first firewall (70) and is separated from the second data-handling device (30) by a second firewall (80),
wherein the second data-handling device (30) is designed to analyse the quality data (113, 123, 133, 143) of at least two identical treatments, carried out in succession with the same tool controller (11 to 14), of at least one workpiece (8) in relation to a predetermined criterion and to transmit said quality data to a display device (31) such that the information (321, 322) in relation to the quality data (113, 123, 133, 143) is displayed in the form of bars of identical height and width on the display device (31) in a row next to one another in the form of a line (320) or bar chart,
wherein the second data-handling device (30) is additionally designed to transmit display data (311) to the display device (31) for different results of the analysis, said display data being displayed by the display device (31) in the form of bars of different colours and/or different graphic design in the line (320) or bar chart,
wherein the second data-handling device (30) is designed to generate the display data (311) such that the line (320) or the bar chart comprises a predetermined maximum number of bars next to one another for the information (321, 322) in relation to the data (113, 123, 133, 143), wherein the second data-handling device (30) is designed to add a bar for the information (321, 322) in relation to the quality data (113, 123, 133, 143) of a further identical treatment that is carried out to one side of the row and, if the maximum number of bars in the row were to be exceeded as a result, to remove a bar on the other side of the row such that the information (321, 322) about the individual identical treatments that are carried out passes through the row, such that the information (321, 322) generated last by the same tool controller (11 to 14) in relation to the data (113, 123, 133, 143) is always displayed in the line (320) or bar chart, and
wherein the second data-handling device (30) is designed to analyse process data (112, 122, 132, 142) from the first database (21) and to transmit them, in relation to the individual identical treatments that are carried out, to the display device (31) as display data (311), such that the user has displayed to them additional data about each individual process, namely a treatment of the at least one workpiece (8) performed by the at least one tool controller (11 to 14), when the user navigates over the displayed line (320) or the displayed bar chart with a mouse.

2. Tool system (1) according to Claim 1, wherein the at least one tool controller (11 to 14) is a screwing controller and the predetermined number is one hundred.

3. Tool system (1) according to either of the preceding claims, wherein the display device (31) is connected to the tool system (1) via the Internet.

4. Tool system (1) according to one of the preceding claims, wherein the second data-handling device (30) is designed to process the process data (110, 120, 130, 140) stored in the first database (21) by the first data-handling device (20) for analysis of the process data (112, 122, 132, 142) and/or creation of a visualisation of the data (112, 122, 132, 142) and to handle quality data (113, 123, 133, 143) in relation to the quality of the treatment of the at least one workpiece (8) with the tool element (111, 121, 131, 141).

5. Tool system (1) according to Claim 4, wherein a data security level for the first database (21) and the first data-handling device (20) differs from a data security level for the second data-handling device (30).

6. Tool system (1) according to one of the preceding claims,
wherein the second data-handling device (30) is assigned to a zone for an office Intranet (300) that is separated from the protected zone (200) by a second firewall (80).

7. Tool system (1) according to one of the preceding claims,
wherein the at least one tool controller (11 to 14) has at least one welding controller and/or at least one screwing controller and/or at least one drilling controller and/or at least one riveting controller and/or at least one punching controller, and/or wherein the at least two tool controllers (11 to 14) are designed to transmit the data (112, 122, 132, 142; 113, 123, 133, 143) in accordance with a predetermined protocol, in which the data header (A) of the data (112, 122, 132, 142; 113, 123, 133, 143) contains the master data (A1) of the respective tool controller (11 to 14).

8. Method for a tool system of an assembly installation, which tool system has at least one tool controller (11 to 14) for controlling a tool element (111, 121, 131, 141) for treating at least one workpiece (8), and has a first data-handling device (20) that is designed to receive data (112, 113, 122, 123, 132, 133, 142, 143) that comprise process data (112, 122, 132, 142) or process data (112, 122, 132, 142) and quality data (113, 123, 133, 143) that were generated by the at least one tool controller (11 to 14) during the treatment of the at least one workpiece (8), and for storing the process data (112, 122, 132, 142) in a first database (21) and for storing the quality data (113, 123, 133, 143) in a second database (22), wherein the process data (112, 122, 132, 142) comprise measured values in the form of individual numerical values or measurement curves and the quality data (113, 123, 133, 143) comprise a statement as to whether the treatment of the at least one workpiece (8) with the tool element (111, 121, 131, 141) was satisfactory or not satisfactory, wherein the first data-handling device (20) and the first and second database (21, 22) are arranged in a protected zone (200) that is separated from the at least one tool controller (11 to 14) by a first firewall (70) and is separated from the second data-handling device (30) by a second firewall (80), wherein the method comprises the following steps:
using the second data-handling device (30) to handle the data (112, 113, 122, 123, 132, 133, 142, 143) that were generated by the at least one tool controller (11 to 14) during treatment of the at least one workpiece (8),
wherein the second data-handling device (30) analyses the data (113, 123, 133, 143) of at least two identical treatments, carried out in succession with the same tool controller (11 to 14), of at least one workpiece (8) in relation to a predetermined criterion and transmits said data to a display device (31) such that the information (321, 322) in relation to the quality data (113, 123, 133, 143) is displayed in the form of bars of identical height and width on the display device (31) in a row next to one another in the form of a line (320) or bar chart, wherein the second data-handling device (30) transmits display data (311) to the display device (31) for different results of the analysis, said display data being displayed by the display device (31) in the form of bars of different colours and/or different graphic design in the line (320) or bar chart,
wherein the second data-handling device (30) generates the display data (311) such that the line (320) or the bar chart comprises a predetermined maximum number of bars next to one another for the information (321, 322) in relation to the data (113, 123, 133, 143),
wherein the second data-handling device (30) adds a bar for the information (321, 322) in relation to the quality data (113, 123, 133, 143) of a further identical treatment that is carried out to one side of the row and, if the maximum number of bars in the row were to be exceeded as a result, removes a bar on the other side of the row such that the information (321, 322) about the individual identical treatments that are carried out passes through the row, such that the information (321, 322) generated last by the same tool controller (11 to 14) in relation to the data (113, 123, 133, 143) is always displayed in the line (320) or bar chart, and
wherein the second data-handling device (30) analyses process data (112, 122, 132, 142) from the first database (21) and transmits them, in relation to the individual identical treatments that are carried out, to the display device (31) as display data (311), such that the user has displayed to them additional data about each individual process, namely a treatment of the at least one workpiece (8) performed by the at least one tool controller (11 to 14), when the user navigates over the displayed line (320) or the displayed bar chart with a mouse.

9. Method according to Claim 8, comprising the following steps:
using the first data-handling device (20) to receive the data (112, 113, 122, 123, 132, 133, 142, 143) that were generated by the at least two tool controllers (11 to 14) during the treatment of the at least one workpiece (8), storing the process data (112, 122, 132, 142) in a first database (21), and/or
storing the quality data (113, 123, 133, 143) in a second database (22).

## Revendications

1. Système d'outil (1) comprenant un affichage sous forme graphique destiné à un système de montage (100), comprenant
au moins une commande d'outil (11 à 14) destinée à commander un élément d'outil (111, 121, 131, 141) pour le traitement d'une pièce à usiner (8),
un premier dispositif de traitement de données (20) destiné à recevoir des données (112, 113, 122, 123, 132, 133, 142, 143) qui comprennent des données de processus (112, 122, 132, 142) ou des données de processus (112, 122, 132, 142) et des données de qualité (113, 123, 133, 143) ayant été générées par ladite au moins une commande d'outil (11 à 14) lors du traitement de ladite au moins une pièce à usiner (8), et à stocker les données de processus (112, 122, 132, 142) dans une première base de données (21) et à stocker les données de qualité (113, 123, 133, 143) dans une deuxième base de données (22), dans lequel les données de processus (112, 122, 132, 142) comprennent des valeurs de mesure sous forme de valeurs numériques individuelles ou de courbes de mesure et les données de qualité (113, 123, 133, 143) comprennent une déclaration indiquant si le traitement de ladite au moins une pièce à usiner (8) à l'aide dudit élément d'outil (111, 121, 131, 141) était conforme ou non conforme, et un deuxième dispositif de traitement de données (30) destiné à traiter les données (112, 113, 122, 123, 132, 133, 142, 143) ayant été générées par ladite au moins une commande d'outil (11 à 14) lors d'un traitement de la pièce à usiner (8),
dans lequel le premier dispositif de traitement de données (20) et les première et deuxième bases de données (21, 22) sont disposés dans une zone de protection (200) qui est séparée de ladite au moins une commande d'outil (11 à 14) par un premier pare-feu (70) et qui est séparée du deuxième dispositif de traitement de données (30) par un deuxième pare-feu (80),
dans lequel le deuxième dispositif de traitement de données (30) est conçu pour analyser les données de qualité (113, 123, 133, 143) d'au moins deux traitements de même type d'au moins une pièce à usiner (8), exécutés successivement au moyen de la même commande d'outil (11 à 14), en ce qui concerne un critère prédéterminé, et pour les envoyer à un dispositif d'affichage (31), de telle sorte que les informations (321, 322) des données de qualité (113, 123, 133, 143) soient affichées sous forme de barre ayant une hauteur et une largeur identiques sur le dispositif d'affichage (31) dans une rangée côte à côte sous forme de rayon (320) ou de diagramme à barres,
dans lequel le deuxième dispositif de traitement de données (30) est en outre conçu pour envoyer au dispositif d'affichage (31), pour différents résultats de l'analyse, des données d'affichage (311) qui sont affichées par le dispositif d'affichage (31) sous forme de barres ayant des couleurs différentes et/ou une configuration graphique différente dans le rayon (320) ou le diagramme à barres,
dans lequel le deuxième dispositif de traitement de données (30) est conçu pour générer les données d'affichage (311) de telle sorte que le rayon (320) ou le diagramme à barres comprenne, côte à côte, un nombre maximal prédéterminé de barres pour les informations (321, 322) des données (113, 123, 133, 143),
dans lequel le deuxième moyen de traitement de données (30) est conçu pour ajouter une barre pour les informations (321, 322) des données de qualité (113, 123, 133, 143) d'un autre traitement semblable exécuté sur un côté de la rangée et, si le nombre maximal de barres dans la rangée est ainsi dépassé, pour supprimer une barre de l'autre côté de la rangée, de telle sorte que les informations (321, 322) relatives aux traitements de même type individuels exécutés parcourent la rangée, afin que les dernières informations (321, 322) des données (113, 123, 133, 143) générées par la même commande d'outil (11 à 14) soient toujours affichées sur le rayon (320) ou le diagramme à barres, et
dans lequel le deuxième dispositif de traitement de données (30) est conçu pour analyser des données de processus (112, 122, 132, 142) provenant de la première base de données (21) et pour les envoyer au dispositif d'affichage (31) sous forme de données d'affichage (311) pour les traitements de même type individuels exécutés, de telle sorte que l'utilisateur reçoive des données supplémentaires pour chaque processus individuel, lequel est un traitement de ladite au moins une pièce à usiner (8) exécuté par ladite au moins une commande d'outil (11 à 14), lorsque l'utilisateur passe avec une souris sur le rayon (320) affiché ou le diagramme à barres affiché.

2. Système d'outil (1) selon la revendication 1, dans lequel ladite au moins une commande d'outil (11 à 14) est une commande de vissage et ledit nombre prédéterminé est de cent.

3. Système d'outil (1) selon l'une des revendications précédentes, dans lequel le dispositif d'affichage (31) est relié au système d'outillage (1) par l'intermédiaire de l'Internet.

4. Système d'outil (1) selon l'une des revendications précédentes, dans lequel le deuxième dispositif de traitement de données (30) est conçu pour traiter les données de processus (110, 120, 130, 140) stockées par le premier dispositif de traitement de données (20) dans la première base de données (21) pour une analyse des données de processus (112, 122, 132, 142) et/ou pour établir une visualisation des données (112, 122, 132, 142) et pour traiter des données de qualité (113, 123, 133, 143) en ce qui concerne la qualité du traitement de ladite au moins une pièce à usiner (8) au moyen de l'élément d'outil (111, 121, 131, 141).

5. Système d'outil (1) selon la revendication 4, dans lequel un niveau de sécurité des données pour la première base de données (21) et le premier dispositif de traitement de données (20) est différent d'un niveau de sécurité des données pour le deuxième dispositif de traitement de données (30).

6. Système d'outil (1) selon l'une des revendications précédentes,
dans lequel le deuxième dispositif de traitement de données (30) est associé à une zone d'un Intranet de Bureau (300) séparée de la zone de protection (200) par un deuxième pare-feu (80).

7. Système d'outil (1) selon l'une des revendications précédentes,
dans lequel ladite au moins une commande d'outil (11 à 14) comporte au moins une commande de soudage et/ou au moins une commande de vissage et/ou au moins une commande de perçage et/ou au moins une commande de rivetage et/ou au moins une commande de poinçonnage, et/ou dans lequel lesdites au moins deux commandes d'outil (11 à 14) sont conçues pour envoyer les données (112, 122, 132, 142 ; 113, 123, 133, 143) selon un protocole prédéterminé selon lequel l'en-tête (A) des données (112, 122, 132, 142 ; 113, 123, 133, 143) comporte les données de base (A1) de la commande d'outil (11 à 14) respective.

8. Procédé destiné à un système d'outil d'un système de montage, qui comporte au moins une commande d'outil (11 à 14) destinée à commander un élément d'outil (111, 121, 131, 141) pour le traitement d'au moins une pièce (8), et qui comporte un premier dispositif de traitement de données (20) qui est conçu pour recevoir des données (112, 113, 122, 123, 132, 133, 142, 143) comprenant des données de processus (112, 122, 132, 142) ou des données de processus (112, 122, 132, 142) et des données de qualité (113, 123, 133, 143) ayant été générées par ladite au moins une commande d'outil (11 à 14) lors du traitement de ladite au moins une pièce à usiner (8), et pour stocker les données de processus (112, 122, 132, 142) dans une première base de données (21) et pour stocker les données de qualité (113, 123, 133, 143) dans une deuxième base de données (22), dans lequel les données de processus (112, 122, 132, 142) comprennent des valeurs de mesure sous forme de valeurs numériques individuelles ou de courbes de mesure et les données de qualité (113, 123, 133, 143) comprennent une déclaration indiquant si le traitement de ladite au moins une pièce à usiner (8) au moyen de l'élément d'outil (111, 121, 131, 141) est conforme ou non conforme, dans lequel le premier dispositif de traitement de données (20) et les première et deuxième bases de données (21, 22) sont disposés dans une zone de protection (200) qui est séparée de ladite au moins une commande d'outil (11 à 14) par un premier pare-feu (70) et qui est séparée du deuxième dispositif de traitement de données (30) par un deuxième pare-feu (80), dans lequel le procédé comporte les étapes consistant à
traiter, au moyen du deuxième dispositif de traitement de données (30), les données (112, 113, 122, 123, 132, 133, 142, 143) ayant été générées par ladite au moins une commande d'outil (11 à 14) lors d'un traitement de ladite au moins une pièce à usiner (8),
dans lequel le deuxième dispositif de traitement de données (30) analyse les données (113, 123, 133, 143) d'au moins deux traitements de même type d'au moins une pièce à usiner (8), exécutés successivement au moyen de la même commande d'outil (11 à 14), en ce qui concerne un critère prédéterminé et les envoie à un dispositif d'affichage (31), de telle sorte que les informations (321, 322) des données de qualité (113, 123, 133, 143) soient affichées sous forme de barre ayant une même hauteur et une largeur identiques sur le dispositif d'affichage (31) dans une rangée côte à côte sous forme de rayon (320) ou de diagramme à barres,
dans lequel le deuxième dispositif de traitement de données (30) envoie au dispositif d'affichage (31), pour différents résultats de l'analyse, des données d'affichage (311) qui sont affichées par le dispositif d'affichage (31) sous forme de barres ayant des couleurs différentes et/ou une configuration graphique différente dans le rayon (320) ou le diagramme à barres,
dans lequel le deuxième dispositif de traitement de données (30) génère les données d'affichage (311) de telle sorte que le rayon (320) ou le diagramme à barres comprenne, côte à côte, un nombre maximal prédéterminé de barres pour les informations (321, 322) des données (113, 123, 133, 143),
dans lequel le deuxième moyen de traitement de données (30) ajoute une barre pour les informations (321, 322) des données de qualité (113, 123, 133, 143) d'un autre traitement semblable exécuté sur un côté de la rangée et, si le nombre maximal de barres dans la rangée est ainsi dépassé, supprime une barre de l'autre côté de la rangée, de telle sorte que les informations (321, 322) relatives à des traitements de même type individuels exécutés parcourent la rangée, afin que les dernières informations (321, 322) des données (113, 123, 133, 143) générées par la même commande d'outil (11 à 14) soient toujours affichées sur le rayon (320) ou le diagramme à barres, et
dans lequel le deuxième dispositif de traitement de données (30) analyse des données de processus (112, 122, 132, 142) provenant de la première base de données (21) et les envoie au dispositif d'affichage (31) sous forme de données d'affichage (311) pour les traitements de même type individuels exécutés, de telle sorte que l'utilisateur reçoive des données supplémentaires pour chaque processus individuel, lequel est un traitement de ladite au moins une pièce à usiner (8) exécuté par ladite au moins une commande d'outil (11 à 14), lorsque l'utilisateur passe avec une souris sur le rayon affiché (320) ou le diagramme à barres affiché.

9. Procédé selon la revendication 8, comprenant les étapes consistant à :
recevoir, au moyen du premier dispositif de traitement de données (20), les données (112, 113, 122, 123, 132, 133, 142, 143) générées par lesdites au moins deux commandes d'outil (11 à 14) lors du traitement de ladite au moins une pièce à usiner (8),
stocker les données de processus (112, 122, 132, 142) dans une première base de données (21), et/ou stocker les données de qualité (113, 123, 133, 143) dans une deuxième base de données (22).
